# EUROPEAN PATENT APPLICATION

(11) **EP 4 844 085 A1**
(43) Date of publication of application: **25.11.2026**
(21) Application number: 25858152.9
(22) Date of filing: 24.01.2025
(51) Int. Cl.: C22C 21/08, C22C 1/03, C22F 1/047, B21B 3/00, B62D 25/00, B61D 17/04

(54) **5XXX ALUMINUM ALLOY, AND PREPARATION METHOD THEREFOR AND USE THEREOF**

(30) Priority: 29.08.2024 CN 202411194592
(71) Applicant: WEIQIAO LIGHTWEIGHT RESEARCH CENTER AT SOOCHOW, Suzhou, Jiangsu 215000 (CN)
(72) Inventor: ZHANG, Bo, Suzhou, Jiangsu 215000 (CN); WU, Huajiang, Suzhou, Jiangsu 215000 (CN); YAN, Yong, Suzhou, Jiangsu 215000 (CN); NAGAUMI, Hiromi, Suzhou, Jiangsu 215000 (CN)
(74) Representative: 2K Patent Partnerschaft mbB
(86) International application number: PCT/CN2025/074534
(87) International publication number: WO 2026/045097

(57) **Abstract**

The present invention relates to a 5XXX aluminum alloy, and a preparation method therefor and the use thereof. The 5XXX aluminum alloy comprises, in percentages by mass: 0.1-0.4% of Si, 0.35-0.6% of Fe, 0.05-0.3% of Cu, 0.4-0.9% of Mn, 3.5-5.0% of Mg, 0.05-0.3% of Cr, 0-0.25% of Zn, 0.01-0.15% of Sr, 0.01-0.15% of Mo, 0-0.001% of Be, 0.15% or less of Ti, and 0.15% or less of other impurities, with the balance being Al. The 5XXX aluminum alloy of the present application exhibits high strength and good formability even in the case of a high content of Fe and Mn. The 5XXX aluminum alloy of the present application can be prepared by using a recycled aluminum alloy, and inherently has good recyclability, thereby exhibiting great advantages in the aspect of carbon emission reduction.

## Description

### TECHNICAL FIELD

The present disclosure relates to the field of aluminum alloy and aluminum plate and strip processing, and particularly relates to a 5xxx aluminum alloy, and preparation method therefor and use thereof.

### BACKGROUND

This section is intended to provide a background or context to the embodiments of the present disclosure recited in the claims. The description herein cannot be admitted to be prior art by inclusion in this section.

The 5XXX series aluminum alloy is a kind of aluminum alloy with magnesium as main alloying element, and the magnesium content is generally between 3% and 5%. The 5XXX series aluminum alloy has good weldability, formability, corrosion resistance and medium strength, and is widely applied in the fields of rail transit, automobile, ship and the like.

There are many researches on the 5XXX series aluminum alloy in the prior art, and the researches are as follows.

The patent CN106834825A discloses a 5182 aluminum alloy and a process method for preparing a belt for can lid material from the aluminum alloy, and the 5182 aluminum alloy is composed of the following components in percentage by weight: Si: less than or equal to 0.1%, Fe: less than or equal to 0.2%, Cu: 0.04%-0.07%, Mn: 0.3%-0.4%, Mg: 4.5%-4.8%, Cr: less than or equal to 0.05%, Zn: less than or equal to 0.05%, Ti: 0.014%-0.04%, and the rest is Al and some inevitable impurity elements. The alloy strength is improved through high alloying, the generation of grain patterns is inhibited by reasonably controlling the Fe and Si contents, gas cushion continuous annealing furnace is adopted, the grain size is regulated through high-temperature short-time annealing, the performance uniformity of the belt is improved, and the surface quality of the belt is ensured.

The patent CN118360521A discloses a 5182 aluminum alloy with high strength and high elongation and a manufacturing method thereof, and the 5182 aluminum alloy contains the following chemical elements in percentage by mass: Si: 0.05%-0.15%, Fe: 0.20%-0.30%, Cu: 0.05%-0.08%, Mn: 0.30%-0.40%, Mg: 4.8%-5.0%, Cr: 0.02%-0.09%, and Ti: 0.015%-0.025%. Through the design of the chemical composition and the optimization of the manufacturing process, the produced 5182 aluminum alloy not only has high strength but also high elongation.

The patent CN113462936A discloses an aluminum alloy pull-tab for a beverage can and a processing technology thereof, the aluminum alloy pull-tab for a beverage can is punched from 5182 aluminum alloy, the weight percentage of each element of the 5182 aluminum alloy is as follows: Si: less than or equal to 0.08%, Fe: less than or equal to 0.25%, Cu: less than or equal to 0.1%, Mn: 0.2%-0.3%, Mg: 4.4%-4.6%, Cr: less than or equal to 0.05%, Zn: less than or equal to 0.15%, other single impurity is less than or equal to 0.03%, the total impurity is less than or equal to 0.15%, and the balance is Al, and the aluminum alloy pull-tab for a beverage can is processed through melting and casting, sawing and milling, soaking, hot rolling, cold rolling and tension leveling.

However, the patents do not use recycled aluminum as the main raw material. Recycled aluminum has a very high recycling value. Compared with electrolytic aluminum, the energy consumption for producing 1 ton of recycled aluminum is only about 5% of that of electrolytic aluminum, and it has a significant advantage in reducing carbon footprint.

However, recycled aluminum alloys inevitably contain a large amount of Fe, Si and Mn elements. In order to ensure the strength of the alloy, the content of Mg is generally over 3.5 wt.%, so the solubility of impurity elements such as Fe, Mn and Si in the aluminum matrix is further reduced. Therefore, a large amount of Fe, Si and Mn elements form coarse Alx(Fe, Mn), Al(Fe, Mn)Si, Mg₂Si and other second phases in the aluminum alloy, and present complex morphologies such as fishbone-like and flower-like. These coarse second phases are very difficult to be fully broken or dissolved, and are retained in the final aluminum alloy product, which seriously reduces the strength and forming performance of the alloy.

The current application of recycled aluminum alloys in the field of wrought aluminum alloys is mainly 8XXX or 1XXX aluminum alloys with low alloying degree, and expensive rare earth elements such as La, Ce and Sc need to be added to weaken the plasticity reduction caused by coarse iron-rich phase. For example, the patent CN1177778821A improves the plasticity of recycled aluminum alloys and refines the morphology of iron-rich phase by adding 0.5% or more La in the recycled aluminum alloys and improving the cast rolling method.

The patent CN116790947A discloses a 5086 recycled aluminum alloy automobile sheet and a production method thereof. The alloy comprises: Si 0.04%-0.35%, Fe 0.10%-0.35%, Cu less than or equal to 0.10%, Mn 0.20%-0.50%, Mg 3.6%-4.1%, Cr less than or equal to 0.15%, Zn less than or equal to 0.20%, Ti less than or equal to 0.10%, other single impurities less than or equal to 0.05%, total amount of other impurities less than or equal to 0.15%, and the rest is Al. However, the content of Fe needs to be controlled below 0.35% in the patent, so part of electrolytic aluminum needs to be added, and the Rm of the O-state 5086 recycled aluminum alloy is up to 281 MPa, and the R_{p0.2} is up to 131 MPa. The raw materials of the recycled 5086 aluminum alloy only come from aluminum plants and automobile manufacturers' process waste, the sources are limited, the market holding amount is limited, and the aluminum alloy of the automobile manufacturers has a long service life, which undoubtedly prolongs the whole recycling cycle of the recycled aluminum alloy from recycling-sheet processing-use-recycling, and it is difficult to meet the demand of large-scale recycling. And according to the raw materials of the recycled aluminum alloy, it can only be used for the grade preservation of aluminum used in automobiles, and cannot use low-quality recycled aluminum alloys such as can materials with higher Fe content.

In summary, the current use of recycled aluminum to manufacture aluminum products can only be used at the same grade at most, and most of them are used at a lower grade. Therefore, it is still necessary to develop a 5XXX aluminum alloy with high tolerance to impurity elements such as Fe, Mn and Si and the like and good mechanical properties.

### SUMMARY

The present disclosure aims to provide a 5XXX aluminum alloy with high tolerance to impurity elements such as Fe, Mn, Si and the like and good mechanical properties, and a preparation method and application thereof.

To achieve the above object, the present disclosure adopts the technical scheme as follows:
In a first aspect, the present disclosure provides a 5XXX aluminum alloy, comprising, in mass percent, Si 0.1%-0.4%, Fe 0.35%-0.6%, Cu 0.05%-0.3%, Mn 0.4%-0.9%, Mg 3.5%-5.0%, Cr 0.05%-0.3%, Zn 0-0.25%, Sr 0.01%-0.15%, Mo 0.01%-0.15%, Be 0-0.001%, Ti 0.15% or less, other impurities 0.15% or less, and Al as the balance.

In some embodiments, the 5XXX aluminum alloy comprises, in mass percent, Si 0.2%-0.3%, Fe 0.4%-0.55%, Cu 0.05%-0.3%, Mn 0.45%-0.85%, Mg 3.5%-4.5%, Cr 0.05%-0.3%, Zn 0-0.25%, Sr 0.01%-0.15%, Mo 0.01%-0.15%, Be 0-0.001%, Ti 0.15% or less, other impurities 0.15% or less, and Al as the balance.

In some embodiments, the Sr is present in an amount of 0.02%-0.1%, for example 0.02%, 0.03%, 0.04%, 0.05%, 0.06%, 0.07%, 0.08%, 0.09%, or 0.1%, in mass percent.

In some embodiments, the Mo is present in an amount of 0.02%-0.1%, for example 0.02%, 0.03%, 0.04%, 0.05%, 0.06%, 0.07%, 0.08%, 0.09%, or 0.1%, in mass percent.

In some embodiments, the Be is present in an amount of 0.0001%-0.001%, for example 0.0001%, 0.0002%, 0.0003%, 0.0004%, 0.0005%, 0.0006%, 0.0007%, 0.0008%, 0.0009%, or 0.001%, in mass percent.

In some embodiments, the Zn is present in an amount of 0.15%-0.25%, in mass percent.

In some embodiments, the total amount of Sr and Mo is 0.15% or less, in mass percent.

In some embodiments, the total amount of Mn, Mg, and Cu is 4% or more, in mass percent.

According to some embodiments, a mass ratio of a total mass of the Mn and the Cr to a mass of the Fe is 1:1 to 3:1, for example 1:1, 1.1:1, 1.2:1, 1.3:1, 1.4:1, 1.5:1, 1.6:1, 1.7:1, 1.8:1, 1.9:1, 2:1, 2.1:1, 2.2:1, 2.3:1, 2.4:1, 2.5:1, 2.6:1, 2.7:1, 2.8:1, 2.9:1, 3:1.

According to some embodiments, a mass ratio of a total mass of the Sr and the Mo to a mass of the Si is 1:20 to 1:1.5, and further, a mass ratio of a total mass of the Sr and the Mo to a mass of the Si is 1:1.5 to 1:5, for example 1:1.5, 1:1.6, 1:1.7, 1:1.8, 1:1.9, 1:2, 1:2.1, 1:2.2, 1:2.3, 1:2.4, 1:2.5, 1:2.6, 1:2.7, 1:2.8, 1:2.9, 1:3, 1:3.1, 1:3.2, 1:3.3, 1:3.4, 1:3.5, 1:3.6, 1:3.7, 1:3.8, 1:3.9, 1:4, 1:4.1, 1:4.2, 1:4.3, 1:4.4, 1:4.5, 1:4.6, 1:4.7, 1:4.8, 1:4.9, 1:5.

According to some embodiments, a mass percentage of each of the other impurities is 0.05% or less.

According to some embodiments, the 5XXX aluminum alloy has a tensile strength Rm of 330 MPa and above, a proof stress at specified plastic elongation R_{p0.2} of 180 MPa and above, and an elongation after fracture A₅₀ of 22% and above.

According to some embodiments, the 5XXX aluminum alloy has an average equivalent diameter of iron-rich phase of 1.6 µm or less.

According to some embodiments, the 5XXX aluminum alloy is an O-state aluminum alloy.

The second aspect of the present disclosure provides a preparation method of the 5XXX aluminum alloy, comprising the following steps:
(1) taking waste aluminum as a raw material, selectively adding one or more of Al-Mn, Al-Cr, Al-Mo, Mg ingot, Al-Sr, and Al-Be intermediate alloy, and sequentially performing melting, deslagging, alloying, refining, and casting to obtain an aluminum alloy ingot;
(2) performing homogenization treatment on the aluminum alloy ingot, and controlling a homogenization treatment temperature to be 420°C-480°C and a holding time to be 2h -12h;
(3) performing hot rough rolling on the aluminum alloy ingot after the homogenization treatment, and controlling a deformation amount to be greater than 86%;
(4) performing hot finish rolling on the hot-rolled material after the hot rough rolling, and controlling a deformation amount to be greater than 80%;
(5) performing cold rolling on the hot-rolled material after the hot finish rolling, and controlling a deformation amount to be 65%-93%;
(6) annealing the cold-rolled material after cold rolling to obtain the 5XXX aluminum alloy.

According to some embodiments, the waste aluminum is one or more of recycled beverage cans, automobile plates, and ship plates.

Wherein, the beverage cans are mainly 3XXX and 5XXX aluminum alloys, and the automobile plates and ship plates are mainly 5XXX and 6XXX aluminum alloys. The waste aluminum of present disclosure is one or more of 3XXX aluminum alloys, 5XXX aluminum alloys, 6XXX aluminum alloys from other sources in addition to recycled beverage cans, automobile plates, ship plates, and the like.

According to some embodiments, in step (3), the hot rough rolling is performed in 16-22 passes.

According to some embodiments, in step (4), the final rolling temperature of the hot finish rolling is controlled to be greater than 310°C.

According to some embodiments, in step (6), the annealing is performed in a box-type annealing furnace or a gas cushion continuous annealing furnace.

Further, when annealing is performed in the box-type annealing furnace, the temperature is controlled to be 300°C-380°C, and the holding time is 2h-6h; when annealing is performed in the gas cushion continuous annealing furnace, the temperature is controlled to be 440°C-500°C, and the holding time is 0s-120s.

According to some embodiments, in step (1), the area percentage of iron-rich phase in the aluminum alloy ingot is controlled to be 3.5% or less, and the average equivalent diameter is 3.5µm or less; the area percentage of Mg₂Si phase is controlled to be 1.6% or less, and the average equivalent diameter is 1.2µm or less.

The third aspect of the present disclosure provides use of the 5XXX aluminum alloy or the 5XXX aluminum alloy prepared by the preparation method in an automobile body inner plate, a structural part or a rail transit structural part.

The fourth aspect of the present disclosure provides an automobile body inner plate, a structural part or a rail transit structural part, wherein its material comprises the 5XXX aluminum alloy described above.

Compared with the prior art, the present disclosure has the following advantages:
Compared with the conventional high-strength 5XXX aluminum alloy, the 5XXX aluminum alloy of the present disclosure has high Fe and Mn element contents, contains Sr and Mo, and selectively contains Be, that is, the 5XXX aluminum alloy of the present disclosure has high tolerance to impurity elements such as Fe and Mn and the like by improving the composition of the 5XXX aluminum alloy, in particular, by adding Sr and Mo, and selectively adding Be, and the 5XXX aluminum alloy still has high strength and excellent formability at high Fe and Mn element contents, and can be used in the fields of automobile body inner plates, structural parts and rail transit.

The 5XXX aluminum alloy can be prepared by using recycled aluminum alloy, and has good recyclability and great advantages in reducing carbon emission.

The present disclosure further improves the preparation process, can more fully break the coarse second phase particles, realizes the regulation of the microstructure and performance of the final product, and further improves the strength and formability of the product.

### BRIEF DESCRIPTION OF DRAWINGS

FIG. 1 is a cast microstructure diagram of the aluminum alloy ingot of Comparative Example 1;
FIG. 2 is a cast microstructure diagram of the aluminum alloy ingot of Comparative Example 3;
FIG. 3 is a cast microstructure diagram of the aluminum alloy ingot of Example 1;
FIG. 4 is a cast microstructure diagram of the aluminum alloy ingot of Example 2;
FIG. 5 is a cast microstructure diagram of the aluminum alloy ingot of Example 3;
FIG. 6 is a cast microstructure diagram of the aluminum alloy ingot of Example 4;
FIG. 7 is a cast microstructure diagram of the aluminum alloy ingot of Example 5;
FIG. 8 is a cast microstructure diagram of the aluminum alloy ingot of Example 6;
FIG. 9 is a cast microstructure diagram of the aluminum alloy ingot of Example 7;
FIG. 10 is a graph of the statistical results of the area percentage of the Fe-rich phase in the cast microstructure of the alloy;
FIG. 11 is a graph of the statistical results of the equivalent diameter of the Fe-rich phase in the cast microstructure of the alloy;
FIG. 12 is a graph of the statistical results of the area percentage of the Mg₂Si phase in the cast microstructure of the alloy;
FIG. 13 is a graph of the statistical results of the equivalent diameter of the Mg₂Si phase in the cast microstructure of the alloy;
FIG. 14 is a metallographic microstructure diagram of the ingot of Comparative Example 1 after homogenization treatment;
FIG. 15 is a metallographic microstructure diagram of the ingot of Comparative Example 2 after homogenization treatment;
FIG. 16 is a metallographic microstructure diagram of the ingot of Comparative Example 3 after homogenization treatment;
FIG. 17 is a metallographic microstructure diagram of the ingot of Comparative Example 4 after homogenization treatment;
FIG. 18 is a metallographic microstructure diagram of the ingot of Example 1 after homogenization treatment;
FIG. 19 is a metallographic microstructure diagram of the ingot of Example 2 after homogenization treatment;
FIG. 20 is a metallographic microstructure diagram of the ingot of Example 3 after homogenization treatment;
FIG. 21 is a metallographic microstructure diagram of the ingot of Example 4 after homogenization treatment;
FIG. 22 is a metallographic microstructure diagram of the ingot of Example 5 after homogenization treatment;
FIG. 23 is a metallographic microstructure diagram of the ingot of Example 6 after homogenization treatment;
FIG. 24 is a metallographic microstructure diagram of the ingot of Example 7 after homogenization treatment;
FIG. 25 is a graph of the statistical results of the equivalent diameter of the Fe-rich phase in the rolled aluminum alloy.

### DETAILED DESCRIPTION

Due to existing technology for manufacturing aluminum products from recycled aluminum, the highest grade can only be maintained for use in the original product. Most of them are used for lower grades. Additionally, there is low tolerance for iron elements. It is usually necessary to limit iron content to below 0.35% to ensure the performance of manufactured aluminum alloys. Therefore, the present disclosure discloses a high-Fe and high-Mn content and high-strength Al-Mg alloy and plate, and a manufacturing method and application thereof, the alloy has high strength and good formability, the alloy can be produced from recycled materials such as can materials and the like, the alloy itself has the characteristics of recycling and reuse, and the alloy offers significant advantages in terms of reducing the carbon emissions associated with aluminum alloys.

Since the performance of the aluminum alloy mainly depends on the alloy composition, the alloy composition directly determines the most basic characteristics of the alloy, such as mechanical performance, forming performance, and the like. Therefore, the present disclosure controls the composition, reduces the content of the Mg element, controls the upper limit of the Mn and Cr elements, and adds Sr, Mo, and Be micro-alloying elements, so that the precipitation behavior of the α-Al matrix and the second phase of the aluminum alloy in the solidification process is changed. The grain size, the morphology, the quantity, and the size of the iron-rich phase are controlled, and the homogenization treatment, the hot rough rolling, the hot finish rolling, and the cold rolling process are controlled, so that the coarse second phase particles are fully broken, and the final annealing process is combined, so that the microstructure and the performance of the final product are controlled. The tolerance of the alloy to the impurity elements such as Fe, Mn, and Si is finally improved, and the alloy has good strength and plasticity matching.

In the present disclosure, a high proportion of recycled aluminum alloy can be used as raw materials, and only a small amount of Al-Mn, Al-Cr, Al-Mo, Mg ingot, Al-Sr, and Al-Be intermediate alloys need to be used to adjust the mass of each element in the aluminum alloy. In some embodiments, the proportion of the recycled aluminum alloy in the total raw materials is 70% or more.

Among other things, it is well known to those skilled in the art that the recycled waste aluminum needs to be pretreated, such as paint removal, before it is used to prepare the 5XXX aluminum alloy. The pretreatment method of recycled waste aluminum is not a point of invention of the present application, and it is sufficient to be processed in accordance with the conventional technology in the field.

The present disclosure is further described below in combination with examples. However, the present disclosure is not limited to the following examples. The implementation conditions used in the examples can be further adjusted according to different requirements for specific use, and the implementation conditions not marked are conventional conditions in the industry. The technical features involved in each embodiment of the present disclosure can be combined with each other as long as they do not conflict with each other.

In the absence of specific description, the preparation method and the process parameters involved in the following examples or comparative examples refer to the prior art, and the raw materials used can be commercially available.

### Comparative Example 1

The present example provided an AA5182 alloy and a preparation method thereof, and the alloy composition met the composition requirements of the 5182 alloy in the AA standard. The AA5182 alloy comprised, in terms of mass percentage, 0.15% of Si, 0.2% of Fe, 0.1% of Cu, 0.35% of Mn, 0.05% of Cr, 4.5% of Mg, 0.15% of Zn, 0.02% of Ti, other inevitable impurities, and the balance of Al.

The preparation method of the alloy comprised the following steps:
(1) An electrolytic aluminum ingot or electrolytic aluminum liquid was used as raw material. The material was melted in a melting furnace at a temperature of 760°C. Subsequently, deslagging, alloying, refining, and casting were sequentially performed to obtain an aluminum alloy ingot having the target aluminum alloy composition.
(2) The aluminum alloy ingot obtained in step (1) was subjected to homogenization treatment. The homogenization treatment was conducted at a temperature of 460°C and held for a duration of 8 hours.
(3) The ingot, after undergoing homogenization treatment, was subjected to hot rough rolling. The hot rolling starting temperature was controlled at 440°C. The ingot was hot rolled through 18 passes to form an intermediate blank, with a hot rough rolling deformation of 91%.
(4) The intermediate blank obtained after hot rough rolling was then subjected to hot finish rolling. The hot finish rolling deformation was controlled to be 93%, and the final rolling temperature was maintained at 320°C.
(5) The coiled material, after hot finish rolling, was cold rolled to a thickness of 1.2 mm, with a cold rolling deformation of 82%.
(6) The coiled material, after cold rolling, was annealed in a box-type annealing furnace. The annealing temperature was controlled at 340°C, and the holding time was 4 hours, yielding an O-state final product.

### Comparative Example 2

The present example was basically the same as Comparative Example 1, and the difference lay only in the homogenization treatment temperature and time of step (2). The homogenization treatment temperature of the present example was 480°C, and the holding time was 6h.

### Comparative Example 3

The present example provided a B1 alloy and a preparation method thereof, and the B1 alloy comprised, in terms of mass percentage, 0.25% of Si, 0.45% of Fe, 0.1% of Cu, 0.8% of Mn, 0.05% of Cr, 4.5% of Mg, 0.15% of Zn, 0.02% of Ti, other inevitable impurities, and the balance of Al.

The preparation method of the alloy comprised the following steps:
(1) Recycled can materials were used as raw materials to perform melting in a melting furnace, the melting temperature was 760°C, and after refining and deslagging, components were subjected to pre-analysis detection. According to the results of the pre-analysis detection of the components, Al-Mn, Al-Cr and Mg ingot intermediate alloys were added for alloying according to the element composition described in the present disclosure to obtain an aluminum alloy melt with qualified components. Then deslagging, alloying, refining, deslagging and standing were sequentially performed, and casting was performed to obtain an aluminum alloy ingot with a target aluminum alloy composition.
(2) The aluminum alloy ingot obtained in step (1) was subjected to homogenization treatment, the homogenization treatment temperature was controlled to be 460°C, and the holding time was 8h.
(3) The ingot after the homogenization treatment was hot rough rolled, the hot rolling starting temperature was controlled to be 440°C, the ingot was hot rolled to an intermediate blank through 18 passes, and the hot rough rolling deformation was 91%.
(4) The intermediate blank after the hot rough rolling was hot finish rolling, the hot finish rolling deformation was controlled to be 93%, and the final rolling temperature was 320°C.
(5) The coiled material after the hot finish rolling was cold rolled to a thickness of 1.2mm, and the cold rolling deformation was 82%.
(6) The coiled material after the cold rolling was annealed in a box-type annealing furnace, the temperature was controlled to be 340°C, the holding time was 4h, and the final product in the O-state was obtained.

### Comparative Example 4

This example was basically the same as Comparative Example 3, and the difference lay only in the homogenization treatment temperature and time of step (2). The homogenization treatment temperature of the present example was 480°C, and the holding time was 6h.

### Example 1

The present example provided a B2 alloy and a preparation method thereof. The B2 alloy comprised, in mass percentage, 0.25% of Si, 0.45% of Fe, 0.1% of Cu, 0.8% of Mn, 0.05% of Cr, 4.2% of Mg, 0.15% of Zn, 0.02% of Ti, 0.05% of Sr, 0.05% of Mo, 0.0005% of Be, other inevitable impurities, and the balance of Al.

The preparation method of the alloy comprised the following steps:
(1) Recycled can materials were used as raw materials to perform melting in a melting furnace, the melting temperature was 760°C, and after refining and deslagging, components were subjected to pre-analysis detection. According to the results of the pre-analysis detection of the components, Al-Mn, Al-Cr, Al-Mo, Mg ingot, Al-Sr, and Al-Be intermediate alloys were added for alloying according to the element composition described in the present disclosure to obtain an aluminum alloy melt with qualified components. Then deslagging, alloying, refining, deslagging and standing were sequentially performed, and casting was performed to obtain an aluminum alloy ingot with a target aluminum alloy composition.
(2) The aluminum alloy ingot obtained in step (1) was subjected to homogenization treatment, the homogenization treatment temperature was controlled to be 420°C, and the holding time was 10h.
(3) The ingot after the homogenization treatment was hot rough rolled, the hot rolling starting temperature was controlled to be 440°C, the ingot was hot rolled to an intermediate blank through 18 passes, and the hot rough rolling deformation was 91%.
(4) The intermediate blank after the hot rough rolling was hot finish rolling, the hot finish rolling deformation was controlled to be 93%, and the final rolling temperature was 320°C.
(5) The coiled material after the hot finish rolling was cold rolled to a thickness of 1.2mm, and the cold rolling deformation was 82%.
(6) The coiled material after the cold rolling was annealed in a box-type annealing furnace, the temperature was controlled to be 340°C, the holding time was 4h, and the final product in the O-state was obtained.

### Example 2

This example was basically the same as Example 1, and the difference lay only in the aluminum alloy components, the homogenization treatment temperature and time of step (2).

In terms of mass percentage, the B3 alloy provided in this example comprised 0.25% of Si, 0.45% of Fe, 0.15% of Cu, 0.8% of Mn, 0.05% of Cr, 3.5% of Mg, 0.15% of Zn, 0.02% of Ti, 0.05% of Sr, 0.1% of Mo, 0.0005% of Be, other inevitable impurities, and the balance of Al.

The temperature of the homogenization treatment in this example was 430°C, and the holding time was 8h.

### Example 3

This example was basically the same as Example 1, and the difference lay only in the aluminum alloy components, the homogenization treatment temperature and time of step (2).

In terms of mass percentage, the B4 alloy provided in this example comprised 0.25% of Si, 0.45% of Fe, 0.15% of Cu, 0.85% of Mn, 0.05% of Cr, 4% of Mg, 0.2% of Zn, 0.02% of Ti, 0.05% of Sr, 0.05% of Mo, 0.0005% of Be, other inevitable impurities, and the balance of Al.

The temperature of the homogenization treatment in this example was 440°C, and the holding time was 12h.

### Example 4

This example was basically the same as Example 1, and the difference lay only in the aluminum alloy components, the homogenization treatment temperature and time of step (2).

In terms of mass percentage, the B5 alloy provided in this example comprised 0.25% of Si, 0.4% of Fe, 0.15% of Cu, 0.8% of Mn, 0.1% of Cr, 4% of Mg, 0.15% of Zn, 0.02% of Ti, 0.02% of Sr, 0.05% of Mo, 0.0005% of Be, other inevitable impurities, and the balance of Al.

The temperature of the homogenization treatment in this example was 450°C, and the holding time was 10h.

### Example 5

This example was basically the same as Example 1, and the difference lay only in the aluminum alloy components, the homogenization treatment temperature and time of step (2).

In terms of mass percentage, the B6 alloy provided in this example comprised 0.25% of Si, 0.45% of Fe, 0.15% of Cu, 0.75% of Mn, 0.1% of Cr, 4% of Mg, 0.15% of Zn, 0.02% of Ti, 0.05% of Sr, 0.02% of Mo, 0.0005% of Be, other inevitable impurities, and the balance of Al.

The temperature of the homogenization treatment in this example was 460°C, and the holding time was 6h.

### Example 6

This example was basically the same as Example 1, and the difference lay only in the aluminum alloy components, the homogenization treatment temperature and time of step (2).

In terms of mass percentage, the B7 alloy provided in this example comprised 0.25% of Si, 0.5% of Fe, 0.2% of Cu, 0.65% of Mn, 0.15% of Cr, 4% of Mg, 0.2% of Zn, 0.02% of Ti, 0.05% of Sr, 0.1% of Mo, 0.0005% of Be, other inevitable impurities, and the balance of Al.

The temperature of the homogenization treatment in this example was 480°C, and the holding time was 4h.

### Example 7

This example was basically the same as Example 1, and the difference lay only in the aluminum alloy components, the homogenization treatment temperature and time of step (2).

In terms of mass percentage, the B8 alloy provided in this example comprised 0.25% of Si, 0.55% of Fe, 0.3% of Cu, 0.5% of Mn, 0.15% of Cr, 4% of Mg, 0.2% of Zn, 0.02% of Ti, 0.1% of Sr, 0.05% of Mo, 0.0005% of Be, other inevitable impurities, and the balance of Al.

The temperature of the homogenization treatment in this example was 480°C, and the holding time was 2h.

### Performance detection

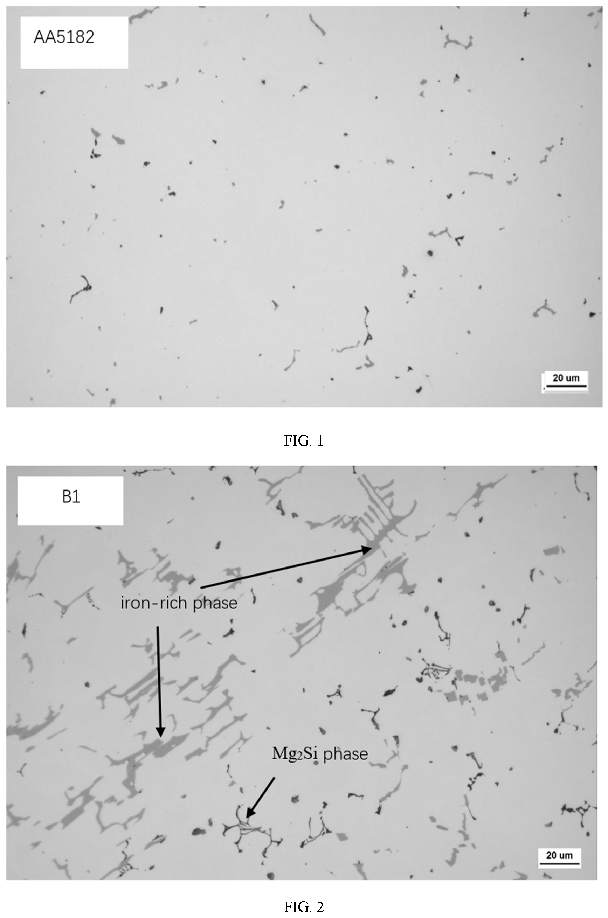

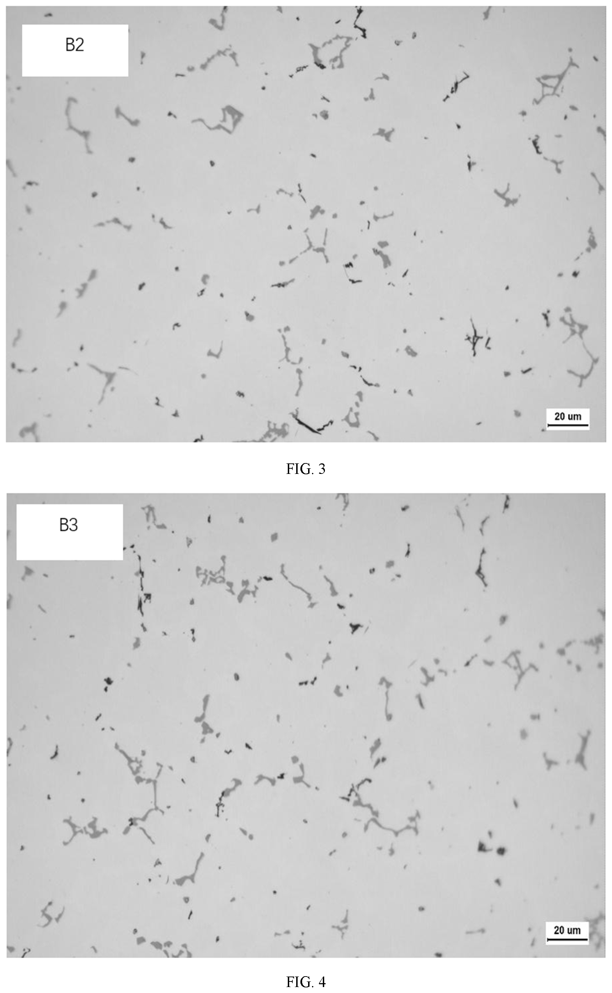

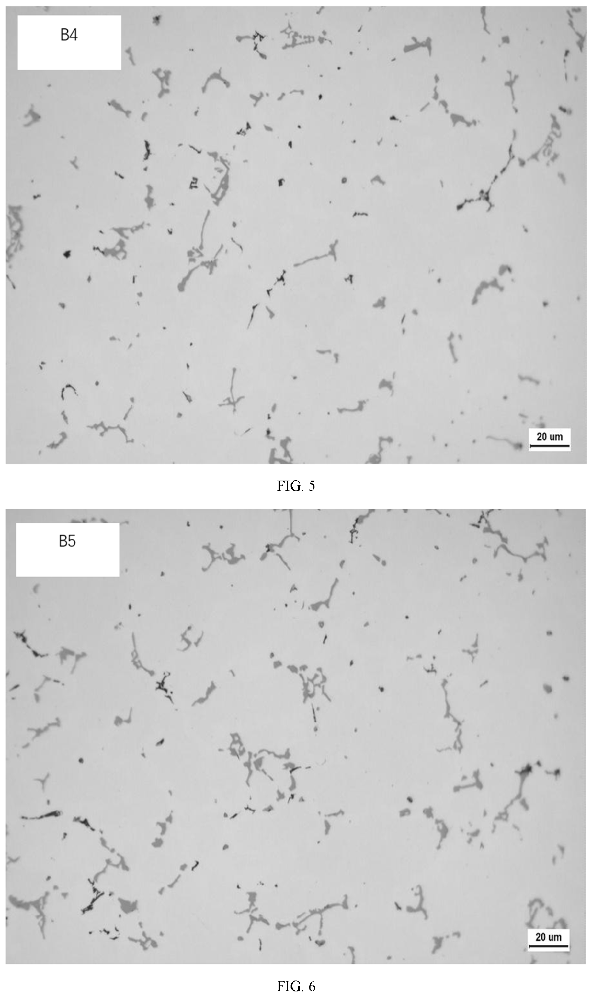

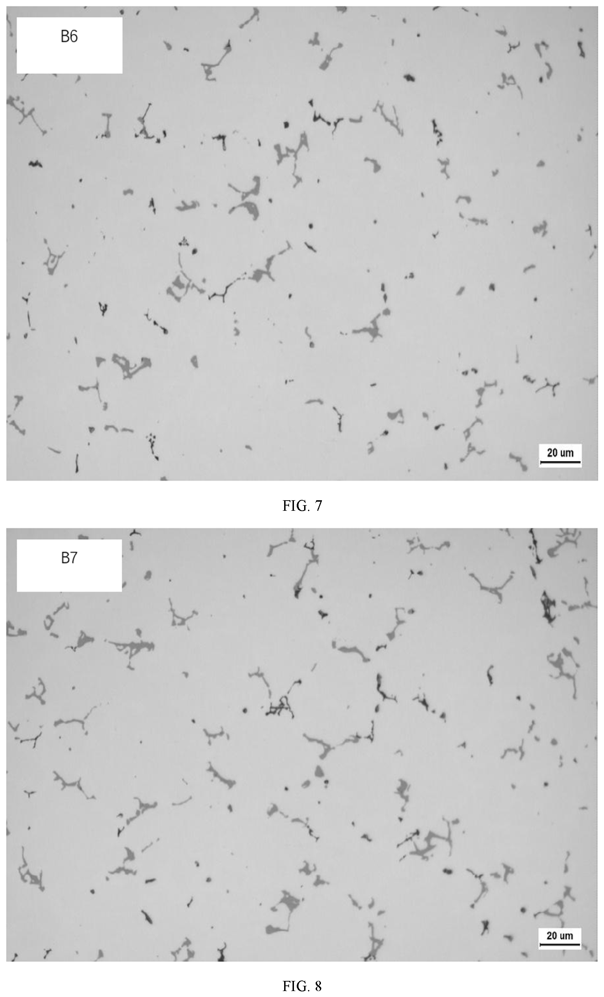

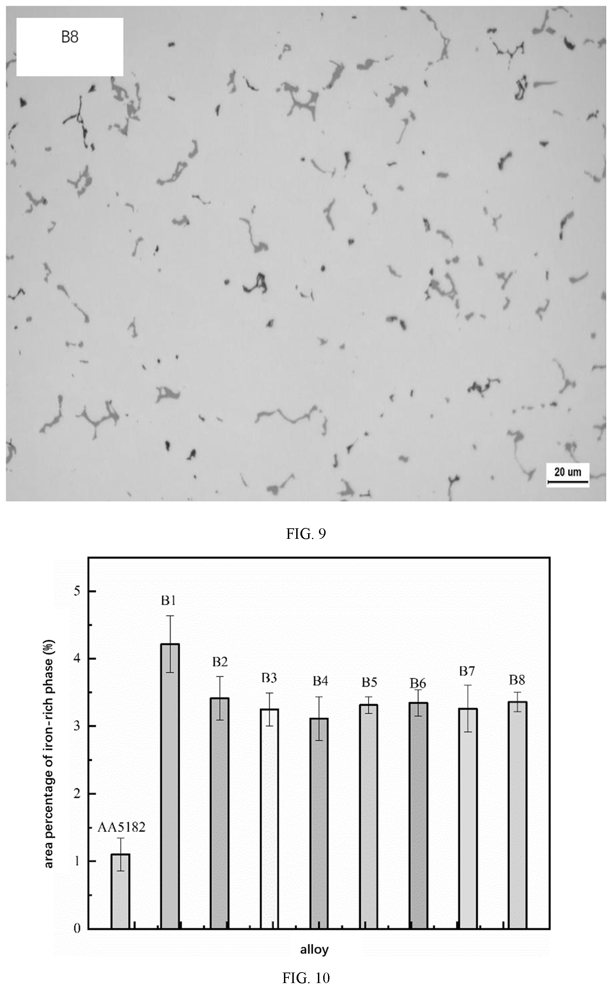

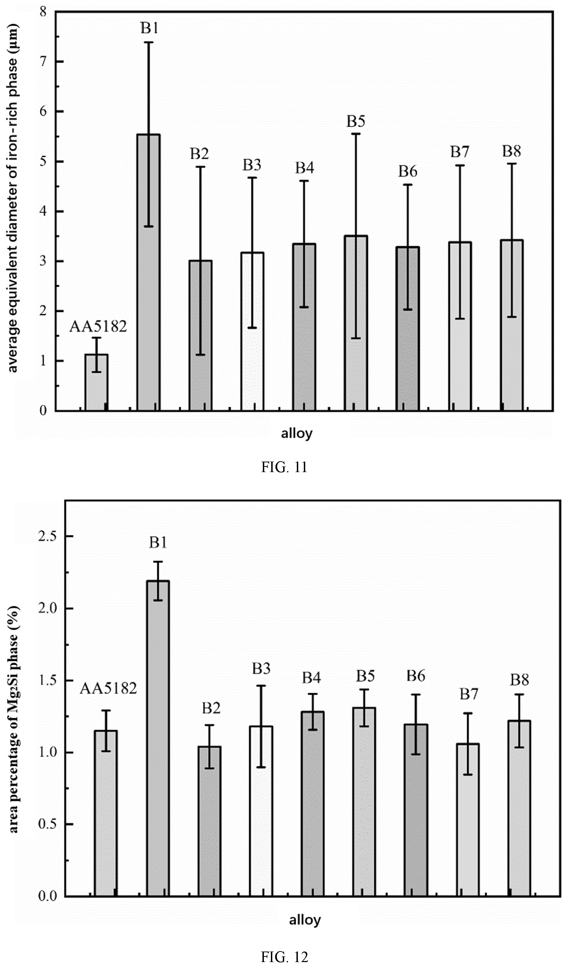

The aluminum alloy ingots prepared in step (1) in each of the examples and the comparative examples were detected according to the microstructure detection method specified in the national standard GB/T3246.1, wherein Fig. 1 is a cast structure diagram of the aluminum alloy ingot of Comparative Example 1, Fig. 2 is a cast structure diagram of the aluminum alloy ingot of Comparative Example 3, Figs. 3 to 9 respectively are cast structure diagrams of the aluminum alloy ingots of Example 1 to Example 7, and Figs. 10 to 13 respectively show the statistical results of the area percentage and the equivalent diameter of the Fe-rich phase and the Mg₂Si phase in the cast structure of the alloy. The area percentage of the Fe-rich phase and the Mg₂Si phase in the metallographic photos under 200X magnification was respectively counted by using an image analysis software, at least 5 visual fields were selected for counting to ensure the accuracy of the statistical results, and the average value was taken as the final result. The equivalent diameters of the Fe-rich phase and the Mg₂Si phase were counted in the same way, the area of each second phase particle was counted, the equivalent diameter of each second phase particle was calculated according to S=πr², at least 200 second phase particles were counted to ensure the accuracy of the statistical results, and the average value was taken as the final result.

As can be seen, the conventional AA5182 alloy as-cast structure contains only a small amount of Mg₂Si phase and iron-rich phase, which is related to the low Fe, Si and Mn element content. The B1 alloy with high Fe and Mn element content, although the β iron phase does not exist in the aluminum alloy due to the high Mn element content in the alloy, the content and equivalent diameter of the iron-rich phase in the B1 alloy are increased to about 4.2% and 5.6 µm respectively compared with the AA5182 alloy, and these coarse second phase particles can seriously damage the forming performance of the alloy. For the B2-B8 alloys, although the recycled materials are used to prepare the alloys as the B1 alloy and thus a large amount of Fe and Mn elements are contained in the B2-B8 alloys. However, the as-cast structure of the B2-B8 alloys is changed significantly by optimizing the alloy composition, especially by using the synergistic effect of Sr, Mo and Be elements and other elements, and by changing the solidification behavior of the B2-B8 alloy. And the content and equivalent diameter of the iron-rich phase and Mg₂Si phase in the alloys are significantly reduced compared with the B1 alloy. It is shown that the high Fe content 5XXX aluminum alloy can effectively reduce and refine the content and size of the iron-rich phase and Mg₂Si phase in the alloy by optimizing the alloy composition.

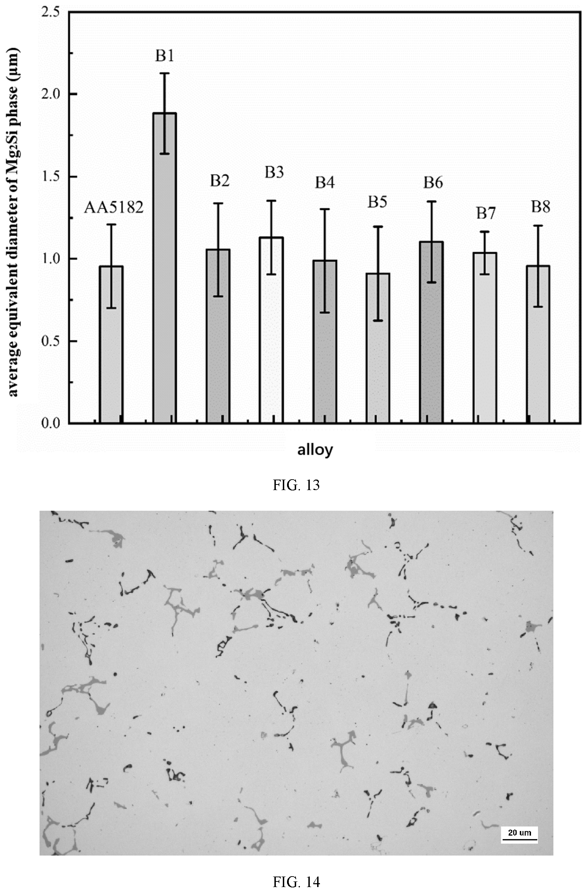

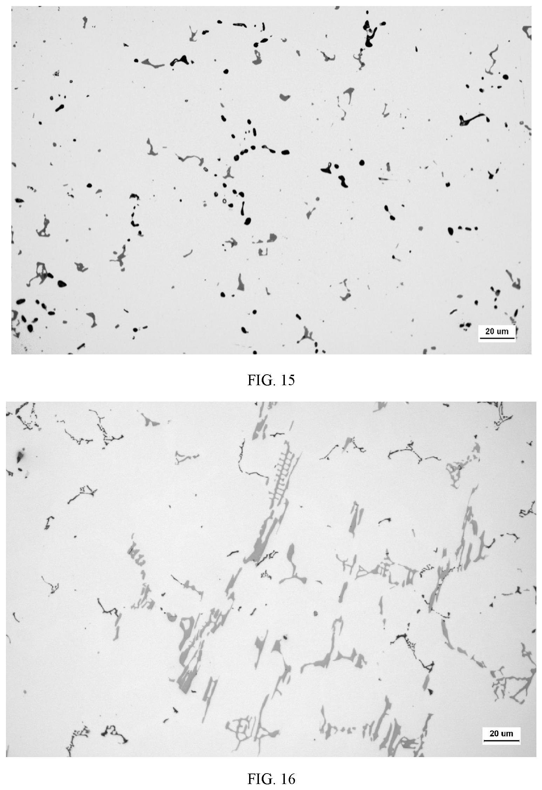

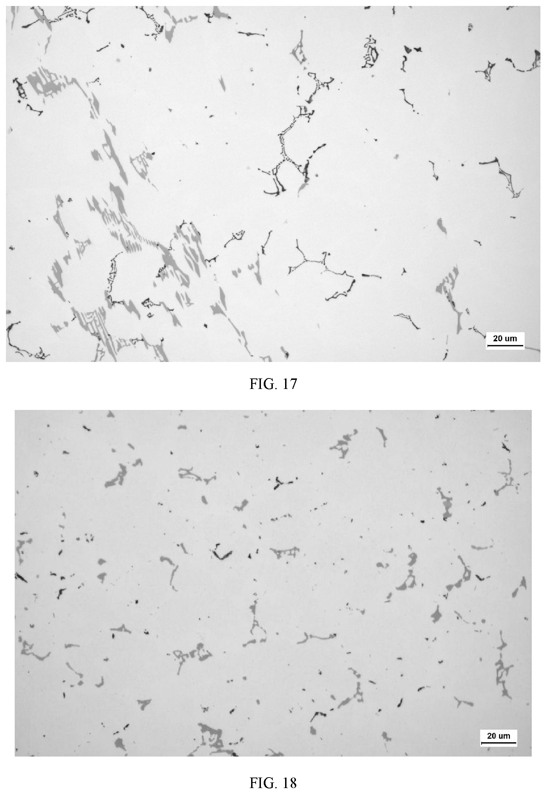

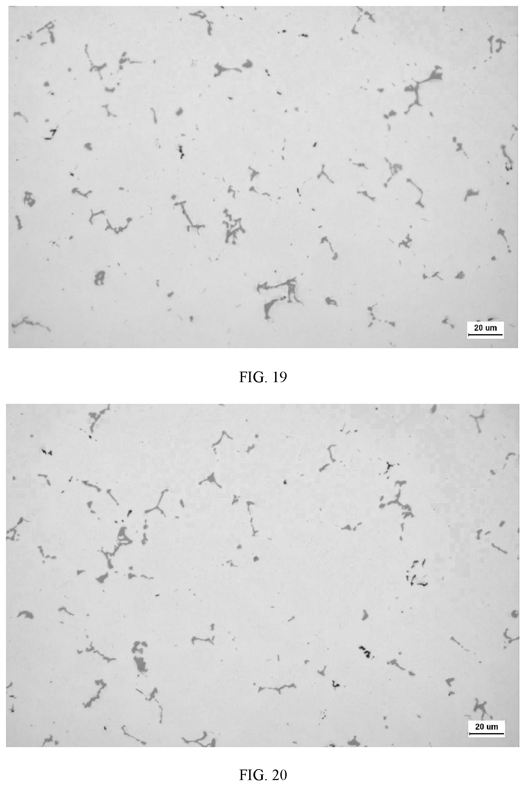

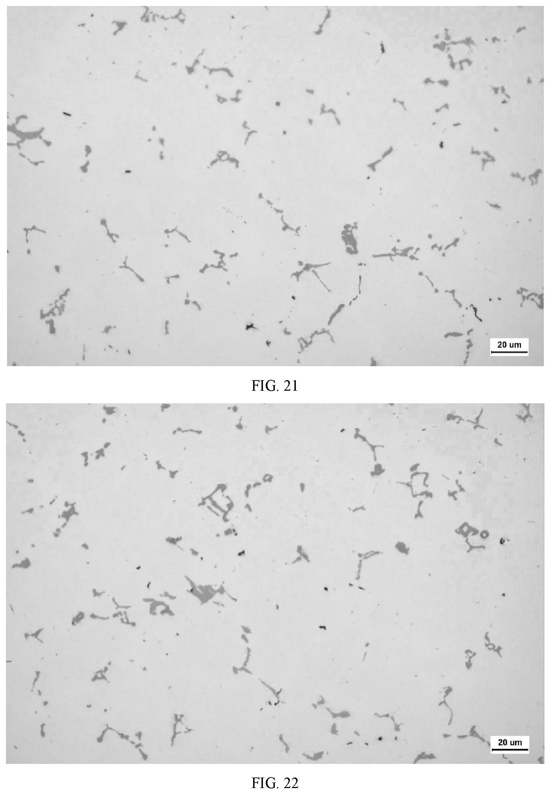

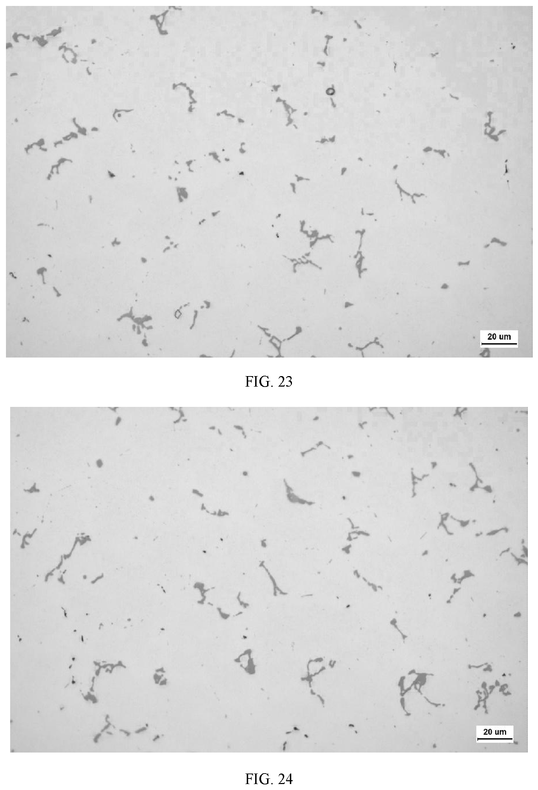

Figs. 14-24 respectively show the metallographic photos of the ingots after the homogenization treatment in step (2) in Comparative Examples 1-4 and Examples 1-7. Although the AA5182 alloy has very low Si and Fe contents, the iron-rich phase and Mg₂Si phase after homogenization still cannot be completely dissolved, and even the Mg₂Si phase content has an increasing trend. The recycled B1 alloy also has the same change rule, and due to the increase of the Fe, Mn and Si element contents, the content and size of the iron-rich phase and Mg₂Si phase in the alloy are significantly increased compared with the AA5182 alloy, and the homogenization treatment cannot eliminate them. However, the content of the iron-rich phase in the B2-B8 alloys produced by the method of examples after the homogenization treatment is significantly reduced compared with the as-cast alloy, and the Mg₂Si phase is fully dissolved.

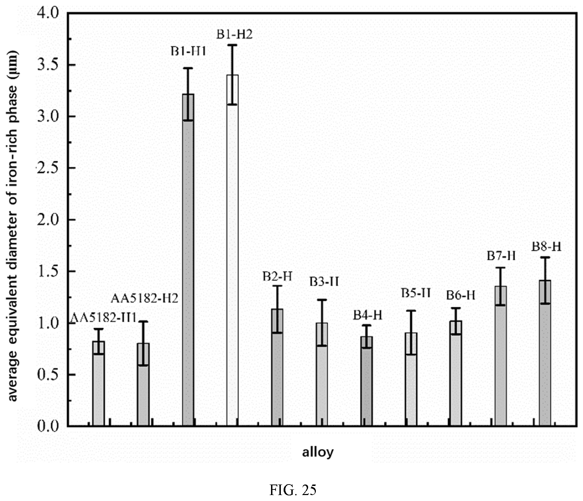

Fig 25 shows the statistical results of the equivalent diameter of iron-rich phase in the rolled aluminum alloy, wherein AA5182-H1 is the rolled aluminum alloy in Comparative Example 1, AA5182-H2 is the rolled aluminum alloy in Comparative Example 2, B1-H1 is the rolled aluminum alloy in Comparative Example 3, B1-H2 is the rolled aluminum alloy in Comparative Example 4, B2-H to B8-H are the rolled aluminum alloys in Example 1 to Example 7, respectively. In the rolling process, a large rolling deformation is used to further break the nascent second phase particles into smaller particles, thereby significantly improving the formability. The average equivalent diameter of the second phase particles of the rolled B2-B8 alloys produced by the method of the present disclosure is ≤1.6 µm. Although the B1 alloy also uses the same rolling process, the initial Fe-rich phase and Mg₂Si are relatively coarse in size, and are extremely difficult to break down sufficiently during subsequent processing and are therefore retained in the final product. The alloy of the present disclosure combines alloy composition optimization, homogenization and rolling process, the coarse second phase particles are fully broken, thereby weakening the influence on the strength and plasticity.

The cold-rolled final thickness product was annealed, and the plate was treated to O-state to obtain the final product. The final product was detected for tensile properties according to the standard ISO 6892-1:2019, and the results are shown in Table 1, wherein AA5182 is the O-state alloy prepared in Comparative Example 1, B1 is the O-state alloy prepared in Comparative Example 3, and A₅₀ is the elongation at break of a standard tensile specimen with a gauge length of 50 mm. As can be seen from Table 1, the B2-B8 alloys produced by the method of the present disclosure have higher strength than the O-state of AA5182 alloy, and the plasticity is equivalent. The B1 alloy of the recycled 5XXX series automobile plate has slightly higher strength than the O-state of AA5182 alloy, but the plasticity is significantly reduced.

**Table 1**

| Alloy | Rm/MPa | Rp_{0.2}/MPa | A₅₀/% |
|---|---|---|---|
| AA5182 | 280 | 130 | 23.5 |
| B1 | 312 | 176 | 18.2 |
| B2 | 332 | 183 | 23.6 |
| B3 | 334 | 184 | 23.3 |
| B4 | 330 | 182 | 23.2 |
| B5 | 333 | 184 | 23.8 |
| B6 | 334 | 185 | 23.2 |
| B7 | 331 | 181 | 23.5 |
| B8 | 332 | 182 | 23.1 |

In summary, the Al-Mg aluminum alloy with high Fe and Mn contents prepared by the embodiment of the present disclosure, which is made from recycled aluminum cans as raw materials and produced through optimized alloy composition, melting and casting, homogenization, hot rolling, cold rolling, and annealing processes, has higher strength and higher formability than AA5182, and can meet the application requirements of automobile body inner plates, structural parts, rail transits and the like with higher performance. Moreover, the aluminum alloy described in the present disclosure has extremely high recyclability, effectively reducing carbon emissions.

The present disclosure is described in detail above, which aims to enable those skilled in the art to understand and implement the present disclosure, and cannot limit the protection scope of the present disclosure. Equivalent changes or modifications made according to the essence of the present disclosure should be covered in the protection scope of the present disclosure.

## Claims

1. A 5XXX aluminum alloy, comprising, in mass percent: Si 0.1%-0.4%, Fe 0.35%-0.6%, Cu 0.05%-0.3%, Mn 0.4%-0.9%, Mg 3.5%-5.0%, Cr 0.05%-0.3%, Zn 0-0.25%, Sr 0.01%-0.15%, Mo 0.01%-0.15%, Be 0-0.001%, Ti 0.15% or less, other impurities 0.15% or less, and Al as the balance.

2. The 5XXX aluminum alloy according to claim 1, comprising, in mass percent: Si 0.2%-0.3%, Fe 0.4%-0.55%, Cu 0.05%-0.3%, Mn 0.45%-0.85%, Mg 3.5%-4.5%, Cr 0.05%-0.3%, Zn 0-0.25%, Sr 0.01%-0.15%, Mo 0.01%-0.15%, Be 0-0.001%, Ti 0.15% or less, other impurities 0.15% or less, and Al as the balance.

3. The 5XXX aluminum alloy according to claim 1 or 2, wherein the mass percent of Sr is 0.02%-0.1%, the mass percent of Mo is 0.02%-0.1%, and the mass percent of Be is 0.0001%-0.001%.

4. The 5XXX aluminum alloy according to claim 1 or 2, wherein the total mass percent of Sr and Mo is not more than 0.15%.

5. The 5XXX aluminum alloy according to claim 1 or 2, wherein the total mass percent of Mn, Mg and Cu is 4% or more.

6. The 5XXX aluminum alloy according to claim 1 or 2, wherein the mass ratio of the total mass of Mn and Cr to the mass of Fe is 1:1-3:1.

7. The 5XXX aluminum alloy according to claim 1 or 2, wherein the mass ratio of the total mass of Sr and Mo to the mass of Si is 1:20-1:1.5.

8. The 5XXX aluminum alloy according to claim 1 or 2, wherein the mass percent of Zn is 0.15%-0.25%.

9. The 5XXX aluminum alloy according to claim 1, wherein the 5XXX aluminum alloy has a tensile strength Rm of 330 MPa or more, a proof stress at specified plastic elongation R_{p0.2} of 180 MPa or more, and an elongation after fracture A₅₀ of 22% or more.

10. The 5XXX aluminum alloy according to claim 1, wherein the 5XXX aluminum alloy has an average equivalent diameter of iron-rich phase of 1.6 µm or less.

11. The 5XXX aluminum alloy according to claim 1, wherein the 5XXX aluminum alloy is an O-state aluminum alloy.

12. A preparation method of the 5XXX aluminum alloy according to any one of claims 1 to 11, comprising the following steps:
(1) taking waste aluminum as raw material, selectively adding one or more of Al-Mn, Al-Cr, Al-Mo, Mg ingot, Al-Sr, and Al-Be intermediate alloy, and sequentially performing melting, deslagging, alloying, refining, and casting to obtain an aluminum alloy ingot;
(2) performing homogenization treatment on the aluminum alloy ingot, and controlling a homogenization treatment temperature to be 420°C-480°C and a holding time to be 2h-12h;
(3) performing hot rough rolling on the aluminum alloy ingot after the homogenization treatment, and controlling a deformation amount to be greater than 86%;
(4) performing hot finish rolling on the hot-rolled material after the hot rough rolling, and controlling a deformation amount to be greater than 80%;
(5) performing cold rolling on the hot-rolled material after the hot finish rolling, and controlling a deformation amount to be 65%-93%;
(6) performing annealing on the cold-rolled material after the cold rolling to obtain the 5XXX aluminum alloy.

13. The preparation method according to claim 12, wherein the waste aluminum is one or more of recycled beverage cans, automobile plates, and ship plates.

14. The preparation method according to claim 12, wherein in step (1), the area percentage of iron-rich phase in the aluminum alloy ingot is controlled to be 3.5% or less, and the average equivalent diameter is controlled to be 3.5 µm or less; and the area percentage of Mg₂Si phase is controlled to be 1.6% or less, and the average equivalent diameter is controlled to be 1.2 µm or less.

15. Use of the 5XXX aluminum alloy according to any one of claims 1 to 11 or prepared by the preparation method according to any one of claims 12 to 14 in an automobile body inner plate, a structural part or a rail transit structural part.
